# EUROPEAN PATENT SPECIFICATION

(11) **EP 1 515 121 B1**
(45) Date of publication and mention of the grant of the patent: **24.10.2007**
(21) Application number: 04028309.5
(22) Date of filing: 27.01.2000
(51) Int. Cl.: G01C 21/00, G08G 1/13

(54) **Navigation system**
Navigationssystem
Système de navigation

(43) Date of publication of application: 16.03.2005
(62) Divisional of application: 00901941.5
(73) Proprietor: MATSUSHITA ELECTRIC INDUSTRIAL CO., LTD, Kadoma-shi, Osaka 571-0050 (JP)
(72) Inventor: Yoshioka, Kenji, Yakohama-shi Kanagawa 222-0034 (JP); Nakama, Yasutoshi, Ikoma-shi Nara 630-0041 (JP); Yamamoto, Masashi, Sagamihara-shi Kanagawa 229-0004 (JP)
(74) Representative: Hössle Kudlek & Partner

(56) References cited:
- EP-A- 0 837 341
- US-A- 5 418 537
- US-A- 5 504 482

## Description

### TECHNICAL FIELD

The present invention relates to a navigation system connected to a terminal unit of an emergency communication system. The emergency communication system is installed on a vehicle such as an automobile and is provided with terminal unit having functions to transmit data such as the present position of a vehicle, registered number of vehicle, etc. to a center for controlling the emergency communication system such as police station, emergency communication center, etc. via emergency communication conveying means in an emergency such as traffic accident, sudden illness, etc.

### BACKGROUND ART

In the past, an emergency communication system has been known, which is installed on a vehicle such as an automobile and is provided with emergency communication conveying means for performing telephone transmission processing via a base station of a communication firm to a center for controlling the emergency communication system such as police station, emergency communication center, etc.

However, in the conventional type emergency communication system, it was not possible to output data such as advancing direction of the vehicle inputted from a gyro sensor in the emergency communication system terminal unit and data such as position information inputted from a GPS receiver in the emergency communication system terminal unit to external part of the emergency communication system terminal unit. In this respect, when a navigation system is installed on a vehicle where emergency communication system is provided, it has been necessary to provide a system for identifying position and status of the vehicle such as gyro sensor, GPS receiver, etc. on the navigation system.

### DISCLOSURE OF THE INVENTION

To overcome the above problems in the prior art, it is an object of the present invention to provide an emergency communication system for simplifying the structure of the navigation system, and also to provide a navigation system connected to the emergency communication system terminal unit.

To solve the above problems, the emergency communication system of the present invention is provided with data output means for outputting data such as advancing direction of the vehicle inputted from a gyro sensor in the emergency communication system terminal unit and data such as position information inputted from a GPS receiver in the emergency communication system terminal unit to a navigation system, which is connected to external part of the emergency communication system terminal unit. As a result, there is no need to provide a system for identifying position and status of the vehicle such as GPS receiver as required in the conventional type navigation system, and it contributes to the simplification of the structure of the navigation system.

According to a basic aspect of the present invention, there is provided an emergency communication system with an emergency communication system terminal unit to be installed on a vehicle such as an automobile, whereby the emergency communication system terminal unit comprises an emergency communication transmission button for starting transmission when a user presses it in an emergency such as traffic accident, sudden illness, etc., a gyro sensor for detecting advancing direction of the vehicle, a GPS antenna for receiving data from satellites, a GPS receiver for detecting the present position of the vehicle from the data received from the GPS antenna, a position information acquisition unit for generating position information based on a signal from the gyro sensor and the GPS receiver, a storage unit for storing various types of data, emergency communication conveying means for transmitting emergency information using a telephone number stored in the storage unit when the emergency communication transmission button is pressed, data output means for outputting data such as advancing direction of the vehicle inputted from the gyro sensor in the position information acquisition unit and data such as position information inputted from the GPS receiver to the navigation system connected to external part of the emergency communication system terminal unit, and a control unit for controlling the entire system. In this respect, there is no need to provide a system for identifying position and status of the vehicle such as a gyro sensor for generating information, e.g. advancing direction of the vehicle, and a GPS receiver for generating data such as position information from the data inputted from GPS antenna. As a result, when the emergency communication system terminal unit is provided, it is possible to simplify the structure of the navigation system.

According to another aspect of the present invention, data from the gyro sensor for generating information such as advancing direction of the vehicle and data for identifying position and status of the vehicle including position information generated from the data received by GPS receiver from GPS antenna as possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. In this respect, there is no need to provide a system for identifying position and status of the vehicle such as the gyro sensor for generating information including advancing direction of the vehicle, and GPS receiver for generating data including position information from the data inputted from GPS antenna. As a result, when the emergency communication system terminal unit is installed, it contributes to the simplification of the structure of the navigation system.

According to still another aspect of the present invention, data from the gyro sensor for generating information such as advancing direction of the vehicle as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide the gyro sensor for generating the information such as advancing direction of the vehicle as needed by the navigation system. As a result, when the emergency communication system terminal unit is installed, it contributes to the simplification of the structure of the navigation system.

According to still another aspect of the present invention, data such as position information generated from the data received by GPS receiver from GPS antenna as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide GPS antenna and GPS receiver as required by the navigation system. As a result, when the emergency communication system terminal unit is installed, it is possible to simplify the structure of the navigation system.

According to still another aspect of the present invention, a speed pulse data indicating the present speed of the vehicle as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide a speed pulse receiving device as required by the navigation system. As a result, when this emergency communication system terminal unit is installed, it is possible to simplify the structure of the navigation system.

According to still another aspect of the present invention, a reverse data indicating advancing status of the vehicle such as moving forward or backward as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide a reverse data receiving device as required by the navigation system. As a result, when the emergency communication system terminal unit is installed, it is possible to simplify the structure of the navigation system.

According to still another aspect of the present invention, a data of latitude and longitude as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide an arithmetic unit for calculating latitude and longitude as required by the navigation system. As a result, when the emergency communication system terminal unit is installed, it is possible to simplify the structure of the navigation system.

According to still another aspect of the present invention, a data required for performing map matching as possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. In this respect, there is no need to provide an arithmetic unit for calculating the data necessary for performing map matching as required by the navigation system. As a result, when the emergency communication system terminal unit is installed, it is possible to simplify the structure of the navigation system.

According to still another aspect of the present invention, a data rom the gyro sensor for generating information such as advancing direction of the vehicle and data such as position information generated from the data received from GPS antenna by GPS receiver and possessed by the position information acquisition unit of the emergency communication system of the above basic aspect of the invention is outputted to the navigation system by the data output means based on trigger condition such as a request of the navigation system connected to external part of the emergency communication system terminal unit or a timer in the control unit. When these data are outputted to the navigation system, non-synchronizing serial signal to be transferred only with data signal is used. In this respect, there is no need to provide a system for identifying position and status of the vehicle as required by the navigation system. As a result, when the emergency communication system terminal unit is installed, it is possible to simplify the structure of the navigation system.

According to still another aspect of the present invention, data from the gyro sensor for generating information such as advancing direction of the vehicle and data such as position information generated from the data received from GPS antenna by GPS receiver and possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. When these data are outputted to the navigation system by the data output means, synchronizing serial signal using synchronizing signal such as frame synchronizing signal, clock synchronizing signal, etc. is used. In this respect, there is no need to provide a system for identifying position and status of the vehicle as required by the navigation system. As a result, when the emergency communication system terminal unit is installed, it is possible to simplify the structure of the navigation system.

According to still another aspect of the present invention, data from the gyro sensor for generating information such as advancing direction of the vehicle and data such as position information generated from the data received from GPS antenna by GPS receiver and possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. When these data are outputted to the navigation system by the data output means, a bus signal using a parallel signal is used. In this respect, there is no need to provide a system for identifying position and status of the vehicle as required by the navigation system. As a result, when the emergency communication system terminal unit is installed, it is possible to simplify the structure of the navigation system.

According to still another aspect of the present invention, data from the gyro sensor for generating information such as advancing direction of the vehicle and data such as position information generated from the data received from GPS antenna by GPS receiver and possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. When these data are outputted to the navigation system by the data output means, LAN as commonly used in network communication is used. In this respect, there is no need to provide a system for identifying position and status of the vehicle as required by the navigation system. As a result, when the emergency communication system terminal unit is installed, it is possible to simplify the structure of the navigation system.

According to still another aspect of the present invention, data from the gyro sensor for generating information such as advancing direction of the vehicle and data such as position information generated from the data received from GPS antenna by GPS receiver and possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. When these data are outputted to the navigation system by the data output means, an infrared signal capable to transmit and receive data without requiring wired connection is used. It is possible to transmit the data for identifying position and status of the vehicle without connecting the navigation system with the emergency communication system terminal unit. In this respect, there is no need to provide a system for identifying position and status of the vehicle as required by the navigation system, and it is possible to simplify the structure of the navigation system.

According to still another aspect of the present invention, data from the gyro sensor for generating information such as advancing direction of the vehicle and data such as position information generated from the data received from GPS antenna by GPS receiver and possessed by the position information acquisition unit of the emergency communication system of the above basic aspect of the invention are outputted to the navigation system by the data output means based on trigger condition such as a request of the navigation system connected to external part of the emergency communication system terminal unit or a timer in the control unit. When these data are outputted to the navigation system by the data output means, using a radio signal capable to transmit and receive data without requiring wired connection is used. It is possible to transmit the data for identifying position and status of the vehicle without connecting the navigation system with the emergency communication system terminal unit. In this respect, there is no need to provide a system for identifying position and status of the vehicle as required by the navigation system, and it is possible to simplify the structure of the navigation system.

According to a still another aspect of the present invention, the navigation system is provided with means for inputting data such as position information generated from the gyro sensor for generating information including advancing direction of the vehicle from the emergency communication system terminal unit and the data received from GPS antenna by GPS receiver. In this respect, there is no need to provide a system for identifying position and status of the vehicle as required by the navigation system, and it is possible to simplify the structure of the navigation system.

According to a still another aspect of the present invention, there is provided a navigation system provided with functions to input the data from the gyro sensor for generating information such as advancing direction of the vehicle from the emergency communication system terminal unit and data such as position information generated from the data received from GPS antenna by GPS receiver, to perform map matching based on the data from the gyro sensor for generating information such as advancing direction of the vehicle and the data received from GPS antenna by the GPS receiver, and to give the information such as position of the vehicle to the user by display means such as LCD. In this respect, there is no need to provide a system for identifying position and status of the vehicle as required by the navigation system, and it is possible to simplify the structure of the navigation system.

According to still another aspect of the present invention, there is provided a navigation system with means for inputting the data generated by the gyro sensor for generating information such as advancing direction of the vehicle outputted from the emergency communication system terminal unit. In this respect, there is no need to provide a system for identifying position and status of the vehicle as required by the navigation system, and it is possible to simplify the structure of the navigation system.

According to still another aspect of the present invention, there is provided a navigation system with means for inputting data such as position information generated from the data received from GPS antenna by GPS received and outputted from the emergency communication system terminal unit. In this respect, there is no need to provide a system for identifying position information such as GPS antenna and GPS receiver as required by the navigation system, and it is possible to simplify the structure of the navigation system.

According to still another aspect of the present invention, there is provided a navigation system with means for inputting a speed pulse data indicating the present speed of the vehicle as outputted from the emergency communication system terminal unit. In this respect, there is no need to provide a device for acquiring the present speed of the vehicle such as a speed pulse acquisition processing unit as required by the navigation system, and it is possible to simplify the structure of the navigation system.

According to still another aspect of the present invention, there is provided a navigation system with means for inputting a reverse data to indicate advancing status of the vehicle such as moving forward or backward as outputted from the emergency communication system terminal unit. In this respect, there is no need to provide a reverse data acquisition unit to indicate advancing status of the vehicle such as moving forward or backward, i.e. a reverse data acquisition processing unit, as required by the navigation system. As a result, it is possible to simplify the structure of the navigation system.

According to still another aspect of the present invention, there is provided a navigation system with means for inputting a latitude and longitude data as outputted from the emergency communication system terminal unit. In this respect, there is no need to provide an arithmetic unit for calculating the latitude and longitude data as required by the navigation system, and it is possible to simplify the structure of the navigation system.

According to still another aspect of the present invention, there is provided a navigation system with means for inputting the data necessary for performing map matching as outputted from the emergency communication system terminal unit. In this respect, there is no need to provide an arithmetic unit for calculating the data necessary for performing map matching as required by the navigation system, and it is possible to simplify the structure of the navigation system.

According to still another aspect of the present invention, there is provided a navigation system, which is characterized in that a non-synchronizing serial signal to transfer only with data signal is used as means for inputting data such as the data from the gyro sensor for generating information including advancing direction of the vehicle from the emergency communication system terminal unit and the data received from GPS antenna by GPS receiver. In this respect, there is no need to provide a system for identifying position and status of the vehicle as required by the navigation system, and it is possible to simplify the structure of the navigation system.

According to still another aspect of the present invention, there is provided a navigation system, which is characterized in that a synchronizing signal using frame synchronizing signal, clock synchronizing signal, etc. and used as means for inputting data such as the data from the gyro sensor for generating information including advancing direction of the vehicle from the emergency communication system terminal unit and the data received from GPS antenna by GPS receiver. In this respect, there is no need to provide a system for identifying position and status of the vehicle as required by the navigation system, and it is possible to simplify the structure of the navigation system.

According to still another aspect of the present invention, there is provided a navigation system, which is characterized in that a bus signal using parallel signal is used as means for inputting data such as the data from the gyro sensor for generating information including advancing direction of the vehicle from the emergency communication system terminal unit and the data received from GPS antenna by GPS receiver. In this respect, there is no need to provide a system for identifying position and status of the vehicle as required by the navigation system, and it is possible to simplify the structure of the navigation system.

According to still another aspect of the present invention, there is provided a navigation system, which is characterized in that a LAN signal used in network communication is used as means for inputting data such as the data from the gyro sensor for generating information including advancing direction of the vehicle from the emergency communication system terminal unit and the data received from GPS antenna by GPS receiver. In this respect, there is no need to provide a system for identifying position and status of the vehicle as required by the navigation system, and it is possible to simplify the structure of the navigation system.

According to still another aspect of the present invention, there is provided a navigation system, which is characterized in that an infrared signal capable to transmit and receive data without requiring wired connection is used as means for inputting data such as the data from the gyro sensor for generating information including advancing direction of the vehicle from the emergency communication system terminal unit and the data received from GPS antenna by GPS receiver. In this respect, the data for identifying position and status of the vehicle can be inputted without connection for inputting data from the emergency communication system. In this respect, there is no need to provide a system for identifying position and status of the vehicle as required by the navigation system, and it is possible to simplify the structure of the navigation system.

According to still another aspect of the present invention, there is provided a navigation system, which is characterized in that a radio signal capable to transmit and receive the data without requiring wired connection is used as means for inputting data such as the data from the gyro sensor for generating information including advancing direction of the vehicle from the emergency communication system terminal unit and the data received from GPS antenna by GPS receiver. In this respect, the data for identifying position and status of the vehicle can be inputted without connection for inputting the data from the emergency communication system. In this respect, there is no need to provide a system for identifying position and status of the vehicle as required by the navigation system, and it is possible to simplify the structure of the navigation system.

### BRIEF DESCRIPTION OF THE DRAWINGS

Fig. 1 is a block diagram showing an arrangement of a terminal unit of an emergency communication system in a first embodiment and others of the present invention;
Fig. 2 is a block diagram of an arrangement of a terminal unit of an emergency communication system in a fifth embodiment and others of the present invention;
Fig. 3 is a block diagram showing an arrangement of a terminal unit of an emergency communication system in a sixth embodiment and others of the present invention; and
Fig. 4 is a block diagram showing an arrangement of a terminal unit of an emergency communication system in a fifteenth embodiment and others of the present invention.

### BEST MODE FOR CARRYING OUT THE INVENTION

Description will be given below on embodiments of an emergency communication system of the present invention referring to the drawings.

### (Embodiment 1)

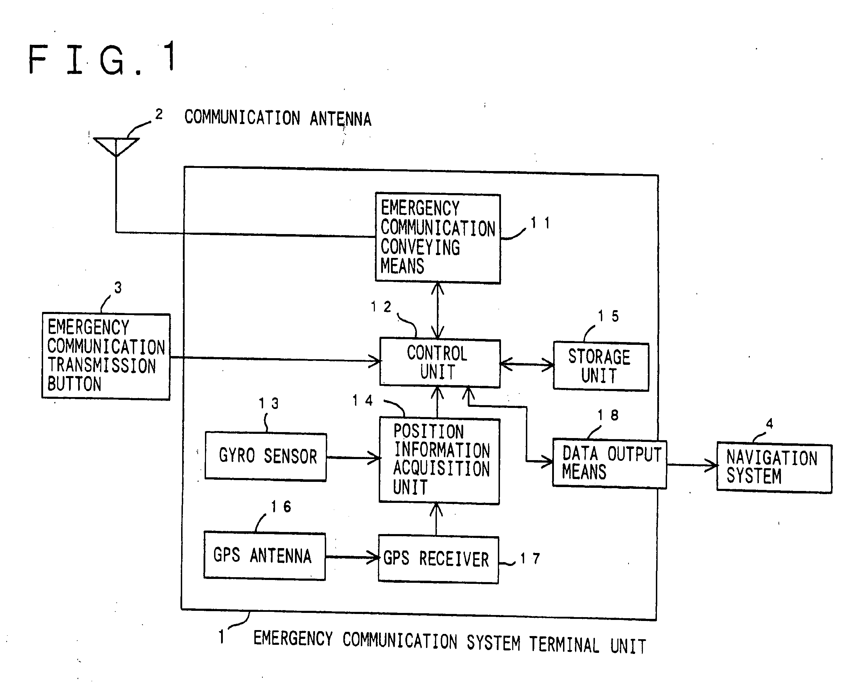

Fig. 1 is a block diagram showing an arrangement of a first embodiment of an emergency communication system of the present invention. In Fig. 1, reference numeral 1 represents a terminal unit of an emergency communication system installed on a vehicle such as automobile, and it is provided with a function to transmit data such as the present position of the vehicle, registered number of vehicle, etc. to a center for controlling the emergency communication system such as police station, fire department, emergency communication center, etc. at the time of emergency such as traffic accident, sudden illness, etc. Reference numeral 2 indicates a communication antenna used for transmitting a transmission signal from emergency communication conveying means 11 to a base station of a communication firm and for outputting receiving signal from the communication firm to the emergency communication conveying means 11. Reference numeral 3 denotes an emergency communication transmission button to be pressed by a user in an emergency such as traffic accident, sudden illness, etc. and to generate an operation signal for starting transmission processing. Reference numeral 4 indicates a navigation system to be connected to external portion of the terminal unit 1 of the emergency communication system.

In the terminal unit 1 of the emergency communication system, reference numeral 11 represents emergency communication conveying means. To a transmission request signal from a control unit 12, telephone transmission processing is started to a communication partner corresponding to a telephone number inputted from the control unit 12 via a base station of a communication firm. When a signal to indicate the switching to communication status is received, i.e. when a response from the communication partner or a line-busy signal is received, it is recognized that as it has been switched to communication status. Then, it is switched over to voice communication control or data communication control, and a signal to notify that it has been switched over to communication status is outputted to the control unit 12. Further, data such as information on advancing direction of vehicle, position information, etc. inputted from the control unit 12 is transmitted to a communication partner corresponding to the above telephone number, i.e. to a center for controlling emergency communication system such as police station, emergency communication center, etc. via a base station of the communication firm.

Based on the operation signal from the emergency communication transmission button 3, the control unit 12 recognizes that there has been a request for emergency communication. To start emergency communication processing, a signal for requesting the present position information is outputted to a position information acquisition unit 14, and data such as information on advancing direction of the vehicle, position information etc. is received from the position information acquisition unit 14. Further, a telephone number of the center for controlling emergency communication system such as police station, emergency communication center, etc. is acquired from a storage unit 15. Using the telephone number, a transmission request for telephone is given to the emergency communication conveying means 11. When a signal to switch over to communication status is received, i.e. when a response from the communication partner corresponding to the telephone number or a signal to switch over to communication status such as a line-busy signal is received, from the emergency communication conveying means 11, it is recognized that it has been switched over to communication status. Then, the data such as information on advancing direction of the vehicle or position information obtained from the position information acquisition unit 14 is outputted to the emergency communication conveying means 11 to the communication partner corresponding to the telephone number via a base station of a communication firm as a signal to the center controlling the emergency communication system such as police station, emergency communication center, etc.

A gyro sensor 13 generates information such as advancing direction of the vehicle, and this is outputted to the position information acquisition unit 14. In response to the position information requesting signal from the control unit 12, data including position information is generated based on the data from the gyro sensor 13 for generating information such as advancing direction of the vehicle and on the data received from a GPS antenna 16 by a GPS receiver 17. Further, the position information acquisition unit 14 outputs the data to the control unit 12, i.e. the data such as advancing direction of the vehicle inputted from the gyro sensor 13 and the data such as position information as generated above.

A storage unit stores information such as telephone number of the center for controlling emergency communication system, e.g. police station, fire department, emergency communication center, etc., registered number of the vehicle with the emergency communication system terminal unit 1 installed on it, and the data of registered person. Further, based on a request signal from the control unit 12, information is outputted such as telephone number of the center controlling the emergency communication system, e.g. police station, emergency communication center, etc., registered number of the vehicle with the emergency communication system terminal unit 1 installed on it, and data of registered person, etc.

Reference numeral 16 represents a GPS antenna for receiving data from a plurality of satellites, and reference numeral 17 is a GPS receiver for outputting the data to calculate position information to the position information acquisition unit 14 based on the data inputted from the GPS antenna 16.

Reference numeral 18 represents data output means, and this outputs data such as advancing direction of the vehicle inputted from the gyro sensor 13, or the data such as position information inputted from the GPS receiver 17 to a navigation system 4 connected to external part of the terminal unit 1 of the emergency communication system.

Next, description will be given on operation of this first embodiment. In Fig. 1, in the emergency communication system installed on a vehicle such as automobile, the user presses the emergency communication button 3 in an emergency such as traffic accident, sudden illness, etc. When the user presses the emergency communication button 3, an operation signal to indicate that the button has been pressed is outputted to the control unit 12 within the terminal unit 1 of the emergency communication system. The control unit 12 recognizes that emergency communication has been requested by the operation signal from the emergency communication button 3. Then, emergency communication processing is started, and a signal to request the present position information is outputted to the position information acquisition unit 14.

Based on the position information requesting signal from the control unit 12, the position information acquisition unit 14 inputs the data from the gyro sensor 13 for generating information such as advancing direction of the vehicle. Also, the data received from GPS antenna 16 by the GPS receiver 17 is inputted. Based on the data such as advancing direction of the vehicle inputted from the gyro sensor 13 and the data inputted from GPS receiver 17, the position information acquisition unit 14 generates position information, and this is outputted to the control unit 12 together with the information on the advancing direction.

The control unit 12 acquires the telephone number of the center controlling the emergency communication system such as police station, fire department, emergency communication center, etc. from the storage unit 15 and requests transmission of telephone to the emergency communication conveying means 11 using the telephone number.

The emergency communication conveying means 11 starts the telephone transmission processing to the communication partner corresponding to the telephone number via a base station of a communication firm using a communication antenna 2. When a transmission response from the communication partner or a signal to switch over to communication status such as line-busy signal is received, the emergency communication conveying means 11 recognizes that it has been switched over the communication status. Then, it is switched over to voice communication control or data communication control, and a signal to notify that it has been switched over to communication status is outputted to the control unit 12.

The control unit 12 judges that communication has been successful, and the data such as information on the advancing direction of the vehicle or position information obtained from the position information acquisition unit 14 is transmitted to a communication partner corresponding to the telephone number, i.e. the center controlling the emergency communication system such as police station, emergency communication center, etc. via a base station of a communication firm.

Apart form the emergency communication transmission, the control unit 12 outputs the data to identify position and status of the vehicle, i.e. advancing direction of the vehicle inputted from the gyro sensor 13, position information inputted from the GPS receiver 17 to the external navigation system 4 using data output means 18.

### (Embodiment 2)

Next, description will be given on operation of an emergency communication system of the present invention according to a second embodiment. For the emergency communication system terminal unit 1, in addition to the emergency communication transmission processing as described above, in response to trigger conditions such as a data request from the control unit 12 or a timer, the position information acquisition unit 14 generates position information based on the data such as advancing direction of the vehicle inputted from the gyro sensor 13 and the data inputted from the GPS receiver 17, and this is outputted to the control unit 12 together with the data on advancing direction. The control unit 12 outputs the data to identify position and status of the vehicle, such as the data on advancing direction of the vehicle inputted from the position information acquisition unit 14 or the data such as position information to the data output means 18. The data output means 18 outputs the data inputted from the control unit 12 to a navigation system 4 connected to external part of the terminal unit 1 of the emergency communication system.

### (Embodiment 3)

Next, description will be given on an emergency communication system of the present invention according to a third embodiment. Description on the third embodiment will be given referring to Fig. 1. In Fig. 1, the position information acquisition unit 14 inputs data such as advancing direction of the vehicle inputted from the gyro sensor 13 and outputs it to the control unit 12. In response to trigger conditions such as a data request from the navigation system 4 connected to the data output means 18 or a timer, etc. the control unit 12 outputs the data such as advancing direction of the vehicle to the navigation system 4 connected to the data output means 18 via the data output means 18.

### (Embodiment 4)

Next, description will be given on operation of an emergency communication system of the present invention in a fourth embodiment. For the fourth embodiment, description will be given referring to Fig. 1. In Fig. 1, based on the data received from GPS antenna 16 by GPS receiver 17, the position information acquisition unit 14 generates data such as position information, and this is outputted to the control unit 12 together with the data on advancing direction. Based on the trigger conditions such as a data request from the navigation system 4 connected to the data output means 18 or a timer, the control unit 12 outputs the data such as position information to the navigation system 4 connected to the data output means 18 via the data output means 18.

### (Embodiment 5)

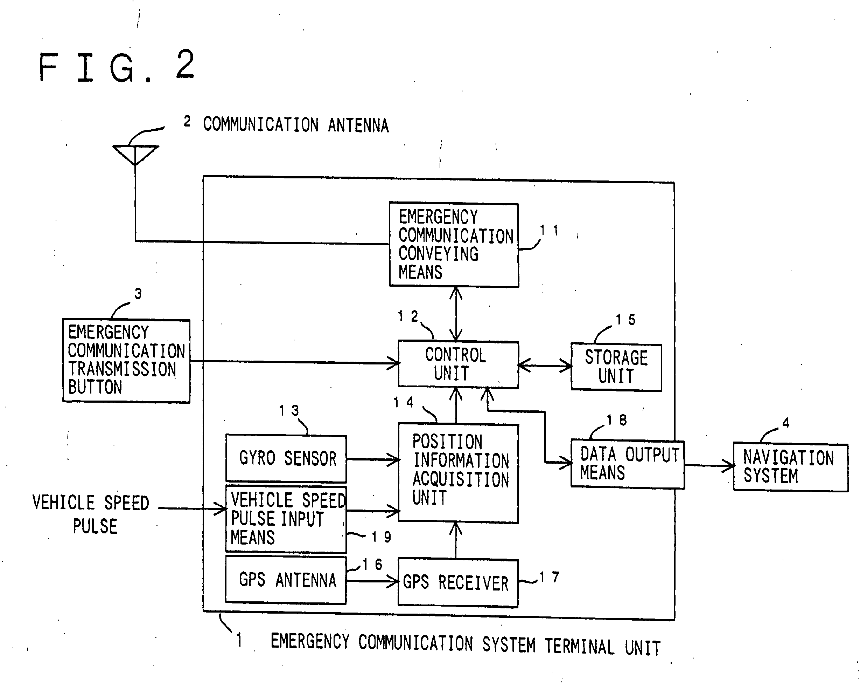

Next, description will be given on operation of an emergency system of the present invention in a fifth embodiment. Fig. 2 is a block diagram showing an arrangement of a fifth embodiment. In Fig. 2, the position information acquisition unit 14 inputs a vehicle speed pulse data from a vehicle speed sensor mounted on wheels via vehicle speed pulse input means 19 and outputs it to the control unit 12. Based on trigger condition such as a data request from the navigation system 4 connected to the data output means 18 or a timer, the control unit 12 outputs the vehicle speed pulse data to the navigation system 4 connected to the data output means 18 via the data output means 18.

### (Embodiment 6)

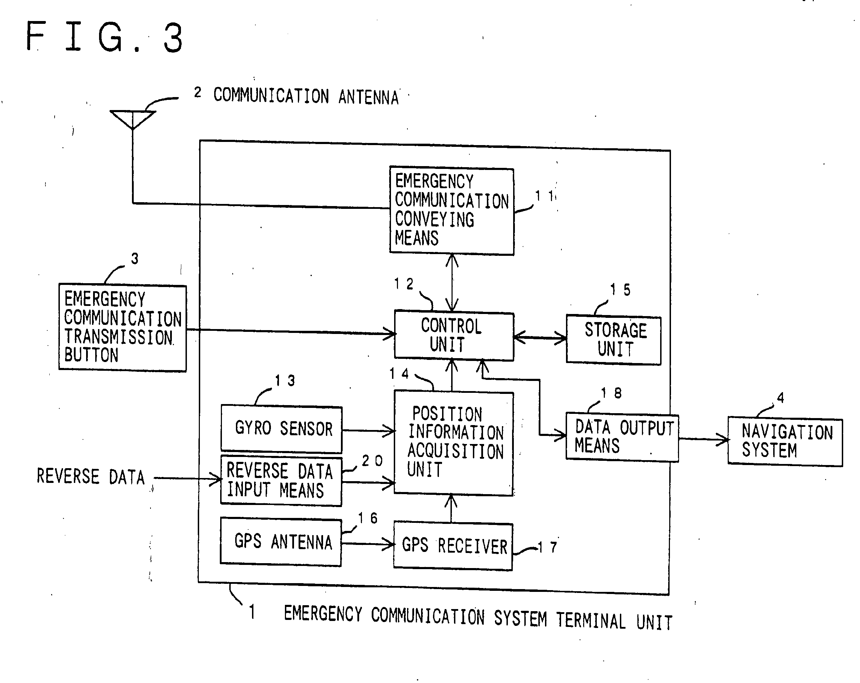

Next, description will be given on operation of an emergency communication system of the present invention in a sixth embodiment. Fig. 3 is a block diagram showing an arrangement of a sixth embodiment. In Fig. 3, the position information acquisition unit 14 inputs a reverse data from a reverse sensor mounted on a reverse lamp, which is lighted up when gear is set to back position via reverse data input means 20, and outputs it to the control unit 12. Based on the trigger condition such as a data request from the navigation system 4 connected to the data output means 18 or a timer, the control unit 12 outputs the reverse data to the navigation system 4 connected to the data output means 18 via the data output means 18.

### (Embodiment 7)

Next, description will be given on operation of an emergency communication system of the present invention in a seventh embodiment. The seventh embodiment will be described referring to Fig. 1. In Fig. 1, from the data such as advancing direction of the vehicle inputted from the gyro sensor 13 or from the data inputted from the GPS receiver 17, the position information acquisition unit 14 generates position information to identify position and status of the vehicle, and this is outputted to the control unit 12 together with the data of advancing direction. From the data to identify position and status of the vehicle, the control unit 12 calculates latitude and longitude of the present position of the vehicle, and this is outputted to the navigation system connected to the data output means 18 via the data output means 18.

### (Embodiment 8)

Next, description will be given on operation of an emergency communication system of the present invention in an eighth embodiment. The eighth embodiment will be described referring to Fig. 1. In Fig. 1, based on the data such as advancing direction of the vehicle inputted from the gyro sensor 13 and the data inputted from the GPS receiver 17, the position information acquisition unit 14 generates position information and outputs the data to identify position and status of the vehicle to the control unit 12. From the data to identify position and status of the vehicle, the control unit 12 calculates the data necessary for map matching on the navigation system 4, and this is outputted to the navigation system 4 connected to the data output means 18 via the data output means 18.

### (Embodiment 9)

Next, description will be given on operation of an emergency communication system in a ninth embodiment. The ninth embodiment will be described referring to Fig. 1. In Fig. 1, the position information acquisition unit 14 generates position information from the data such as advancing direction of the vehicle inputted from the gyro sensor 13 and the data inputted from the GPS receiver 17, and this is outputted to the control unit 12. The control unit 12 outputs the data to identify position and status of the vehicle to the navigation system 4 using a non-synchronizing serial signal transferred only by data communication via the data output means 18.

### (Embodiment 10)

Next, description will be given on operation of an emergency communication system of the present invention in a tenth embodiment. The tenth embodiment will be described referring to Fig. 1. In Fig. 1, the position information acquisition unit 14 outputs the data to identify position and status of the vehicle such as position information generated from the data, e.g. advancing direction of the vehicle inputted from the gyro sensor 13 and the data inputted from the GPS receiver 17 to the control unit 12. The control unit 12 outputs the data to identify position and status of the vehicle to the navigation system 4 using a synchronizing serial signal such as frame synchronizing signal, clock synchronizing signal, etc. via the data output means 18.

### (Embodiment 11)

Next, description will be given on operation of an emergency communication system of the present invention in an eleventh embodiment. The eleventh embodiment will be described referring to Fig. 1. In Fig. 1, the position information acquisition unit 14 outputs the data such as advancing direction of the vehicle inputted from the gyro sensor 13 to the control unit 12. From this data and the data inputted from the GPS receiver 17, position information to identify position and status of the vehicle is generated, and this is outputted to the control unit 12. The control unit 12 outputs the data to identify position and status of the vehicle to the navigation system 4 by a bus signal using parallel signal via the data output means 18.

### (Embodiment 12)

Next, description will be given on operation of an emergency communication system of the present invention in a twelfth embodiment. The twelfth embodiment will be described referring to Fig. 1. In Fig. 1, the position information acquisition unit 14 generates position information to identify position and status of the vehicle from the data such as advancing direction of the vehicle inputted from the gyro sensor 13 and the data inputted from the GPS receiver 17, and this is outputted to the control unit 12. The control unit 12 outputs the data to identify position and status of the vehicle to the navigation system 4 using LAN, adopts format such as IE-BUS, ARCNET, etc. used in network communication, via the data output means 18.

### (Embodiment 13)

Next, description will be given on operation of an emergency communication system in a thirteenth embodiment. The thirteenth embodiment will be described referring to Fig. 1. In Fig. 1, the position information acquisition unit 14 generates position information to identify position and status of the vehicle from the data such as advancing direction of the vehicle inputted from the gyro sensor 13 and the data inputted from the GPS receiver 17, and this is outputted to the control unit 12. The control unit 12 outputs the data to identify position and status of the vehicle to the navigation system 4 using an infrared signal requiring no wired connection such as infrared output element via the data output means 18.

### (Embodiment 14)

Next, description will be given on operation of an emergency communication system of the present invention in a fourteenth embodiment. The fourteenth embodiment will be described referring to Fig. 1. In Fig. 1, the position information acquisition unit 14 generates position information to identify position and status of the vehicle based on the data such as advancing direction of the vehicle inputted from the gyro sensor 13 and the data inputted from the GPS receiver 17, and this is outputted to the control unit 12. The control unit outputs the position information to identify position and status of the vehicle to the navigation system 4 using wireless means such as FM modulation requiring no wired connection such as wireless output system via the data output means 18.

### (Embodiment 15)

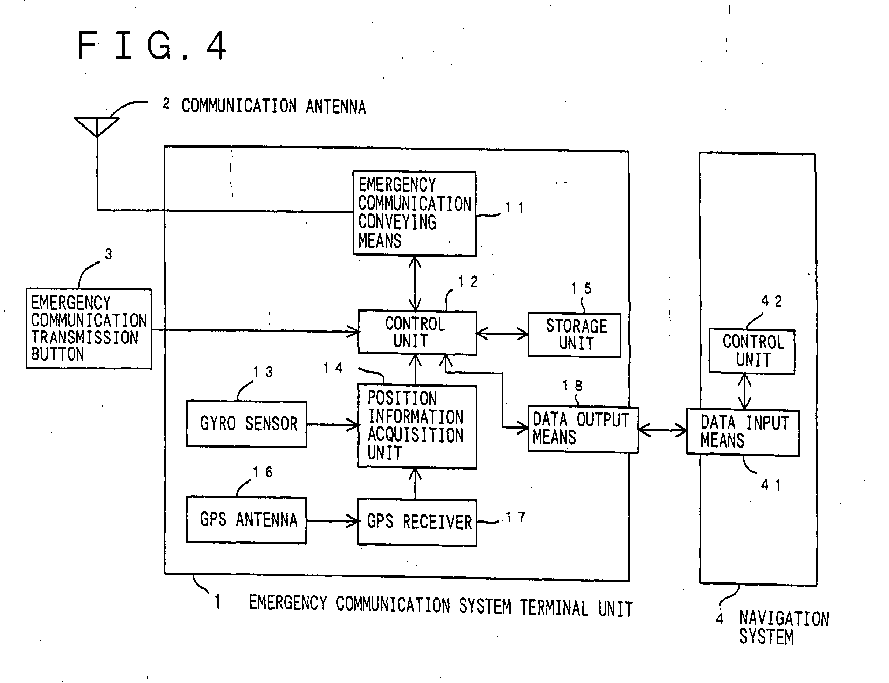

Next, description will be given on operation of an emergency communication system of the present invention in a fifteenth embodiment and the navigation system 4. Fig. 4 is a block diagram showing an arrangement of the fifteenth embodiment. In Fig. 4, the data output means 18 in the terminal unit 1 of the emergency communication system outputs the data to identify position and status of the vehicle outputted from the control unit 12 in the terminal unit of the emergency communication system to data input means 41 in the navigation system 4, which serves as an interface of the emergency communication system terminal unit 1. The data input means 41 outputs the data to identify position and status of the vehicle to a control unit 42 in the navigation system 4.

### (Embodiment 16)

Next, description will be given on operation of an emergency communication system of the present invention in a sixteenth embodiment and the navigation system 4. The sixteenth embodiment will be described referring to Fig. 4. In Fig. 4, the data output means 18 in the emergency communication system terminal unit 1 outputs the data to identify position and status of the vehicle outputted from the control unit 12 in the emergency communication system terminal unit 1 to data input means 41 in the navigation system 4, which serves as an interface of the emergency communication system terminal unit 1. The data input means 41 outputs the data to identify position and status of the vehicle to a control unit 42 in the navigation system 4. The control unit 42 performs map matching from the data to identify position and status of the vehicle and notifies the information such as position of the vehicle to the user using display means such as LCD.

### (Embodiment 17)

Next, description will be given on operation of an emergency communication system of the present invention in a seventeenth embodiment and the navigation system 4. The seventeenth embodiment will be described referring to Fig. 4. In Fig. 4, data output means 18 provided in the emergency communication system terminal unit 1 outputs an information of a gyro sensor 13 for generating information such as advancing direction and outputted from a control unit 12 in the emergency communication system terminal unit 1 to data input means 41 in a navigation system 4, which serves as an interface for the emergency communication system terminal unit 1. The data input means 41 outputs the information from the gyro sensor 13 for generating information such as advancing direction to a control unit 42 in the navigation system 4.

### (Embodiment 18)

Next, description will be given on operation of the emergency communication system and the navigation system 4 in an eighteenth embodiment. For the eighteenth embodiment, description will be given referring to Fig. 4. In Fig. 4, data output means 18 provided in the emergency communication system terminal unit 1 outputs data received from a GPS antenna by a GPS receiver 17 as outputted from the control unit 12 in the emergency communication system terminal unit 1 to data input means 41 in the navigation system 4, which serves as an interface for the emergency communication system terminal unit 1. The data input means 41 outputs the data received from the GPS antenna 16 by the GPS receiver 17 to the control unit 42 in the navigation system 4.

### (Embodiment 19)

Next, description will be given on operation of the emergency communication system and the navigation system 4 of the present invention in a nineteenth embodiment. On the nineteenth embodiment, description will be given referring to Fig. 4. In Fig. 4, data output means 18 provided in the emergency communication system terminal unit 1 outputs a speed pulse data showing the present speed of the vehicle as outputted from the control unit 12 in the emergency communication system terminal unit 1 to data input means 41 in the navigation system 4, serving as an interface of the emergency communication system terminal unit 1. The data input means 41 outputs the speed pulse data showing the present speed of the vehicle to the control unit 42 in the navigation system 4.

### (Embodiment 20)

Next, description will be given on operation of the emergency communication system and the navigation system 4 of the present invention in a twentieth embodiment. For the twentieth embodiment, description will be given referring to Fig. 4. In Fig. 4, data output means 18 provided in the emergency communication system terminal unit 1 outputs a reverse data showing advancing status of the vehicle such as moving forward or backward as outputted from the control unit 12 in the emergency communication system terminal unit 1 to data input means 41 in the navigation system 4, which serves as an interface for the emergency communication system terminal unit 1. The data input means 41 outputs the reverse data showing the moving status of the vehicle such as moving forward or backward to the control unit 42 in the navigation system 4.

### (Embodiment 21)

Next, description will be given on operation of the emergency communication system and the navigation system 4 of the present invention in a twenty-first embodiment. For the twenty-first embodiment, description will be given referring to Fig. 4. In Fig. 4, data output means 18 provided in the emergency communication system terminal unit 1 outputs a latitude and longitude data showing position of the vehicle as outputted from the control unit 12 in the emergency communication system terminal unit 1 to data input means 41 in the navigation system 4, which serves as an interface for the emergency communication system terminal unit 1. The data input means 41 outputs the reverse data showing the moving status of the vehicle such as moving forward or backward to the control unit 42 in the navigation system 4.

### (Embodiment 22)

Next, description will be given on operation of the emergency communication system and the navigation system 4 of the present invention in a twenty-second embodiment. For the twenty-second embodiment, description will be given referring to Fig. 4. In Fig. 4, data output means 18 provided in the emergency communication system terminal unit 1 outputs a data necessary for map matching as outputted from the control unit 12 in the emergency communication system terminal unit 1 to data input means 41 in the navigation system 4, which serves as an interface for the emergency communication system terminal unit 1. The data input means 41 outputs the reverse data showing the moving status of the vehicle such as moving forward or backward to the control unit 42 in the navigation system 4. (Embodiment 23)

Next, description will be given on operation of the emergency communication system and the navigation system 4 of the present invention in a twenty-third embodiment. For the twenty-third embodiment, description will be given referring to Fig. 4. In Fig. 4, data output means 18 provided in the emergency system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1, using a non-synchronizing serial signal format to transfer only in data signal, i.e. a communication format specified by the emergency communication system terminal unit 1 and the navigation system 4. The data input means 41 outputs the data for identifying position and status of the vehicle to the control unit 42 in the navigation system 4.

### (Embodiment 24)

Next, description will be given on operation of the emergency communication system and the navigation system 4 of the present invention in a twenty-fourth embodiment. For the twenty-fourth embodiment, description will be given referring to Fig. 4. In Fig. 4, the data output means 18 provided in the emergency communication system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1, using a synchronizing serial signal format such as frame synchronizing signal, clock synchronizing signal, etc., i.e. a communication format specified by the emergency communication system terminal unit 1 and the navigation system 4. The data input means 41 outputs the data for identifying position and status of the vehicle to the control unit 42 in the navigation system 4.

### (Embodiment 25)

Next, description will be given on operation of the emergency communication system and the navigation system 4 of the present invention in a twenty-fifth embodiment. For the twenty-fifth embodiment, description will be given referring to Fig. 4. In Fig. 4, the data output means 18 provided in the emergency communication system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1 using a bus signal format based on parallel signal, i.e. a communication format specified by the emergency communication system terminal unit 1 and the navigation system 4. The data input means 41 outputs the data for identifying position and status of the vehicle to the control unit 42 in the navigation system 4.

### (Embodiment 26)

Next, description will be given on operation of the emergency communication system and the navigation system 4 of the present invention in a twenty-sixth embodiment. For the twenty-sixth embodiment, description will be given referring to Fig. 4. In Fig. 4, the data output means 18 provided in the emergency communication system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1, using a LAN signal format such as IE-BUS system, ARCNET system, etc. used in network communication, i.e. a communication format specified by the emergency communication system terminal unit 1 and the navigation system 4. The data input means 41 outputs the data for identifying position and status of the vehicle to the control unit 42 in the navigation system 4.

### (Embodiment 27)

Next, description will be given on operation of the emergency communication system and the navigation system 4 of the present invention in a twenty-seventh embodiment. For the twenty-seventh embodiment, description will be given referring to Fig. 4. In Fig. 4, the data output means 18 provided in the emergency communication system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1, using an infrared signal requiring no wired connection, i.e. a communication format specified by the emergency communication system terminal unit 1 and the navigation system 4. The data input means 41 outputs the data for identifying position and status of the vehicle to the control unit 42 in the navigation system 4.

### (Embodiment 28)

Next, description will be given on operation of the emergency communication system and the navigation system 4 of the present invention in a twenty-eighth embodiment. For the twenty-eighth embodiment, description will be given referring to Fig. 4. In Fig. 4, the data output means 18 provided in the emergency communication system terminal unit 1 outputs a data for identifying position and status of the vehicle as outputted from the control unit 12 in the emergency communication system terminal unit 1 to the data input means 41 in the navigation system 4, which serves as an interface for the emergency communication system terminal unit 1, using a radio signal requiring no wired connection, i.e. a communication format specified by the emergency communication system terminal unit 1 and the navigation system 4. The data input means 41 outputs the data for identifying position and status of the vehicle to the control unit 42 in the navigation system 4.

### INDUSTRIAL APPLICABILITY

As it is evident from the above description, the emergency communication system of the present invention is installed on a vehicle such as automobile and is provided with emergency communication conveying means for telephone transmission via a base station of a communication firm to a communication center for controlling emergency communication system such as police station, emergency communication center, etc. The emergency communication system is provided with data output means for outputting data such as data on advancing direction of the vehicle inputted from a gyro sensor in the emergency communication system terminal unit, data such as position information inputted from a GPS receiver provided in the emergency communication system terminal unit to a navigation system connected to external part of the emergency communication system terminal unit. As a result, there is no need to provide a system for identifying position and status of the vehicle such as gyro sensor for generating information, e.g. advancing direction of the vehicle, GPS receiver for generating data, e.g. position information from the data inputted from GPS antenna, and GPS antenna for receiving data from satellites. When this emergency communication system terminal unit is provided on a vehicle, it is possible to simplify the structure of the navigation system.

## Claims

1. A navigation system (4) for notifying vehicle position on display, **characterized by** data input means (41) inputting vehicle position data outputted by an on-vehicle emergency communication system terminal unit (1), and a control unit (42) performing map matching based on the vehicle position data to notify the vehicle position.

2. A navigation system (4) as claimed in claim 1, **characterized in that** the data input means additionally inputs vehicle status data outputted by the on-vehicle emergency communication system terminal unit (1), and the control unit performs map matching based on the vehicle position data and the vehicle status data.

3. A navigation system (4) as claimed in claim 1 or claim 2, **characterized in that** the data input means uses a non-synchronizing serial signal, a synchronizing serial signal, a bus signal, a LAN signal, an infrared signal or a radio signal.

## Patentansprüche

1. Navigationssystem (4) zum Anzeigen einer Fahrzeugposition auf einer Anzeige, **gekennzeichnet durch** Dateneingabemittel (41) , die von einer in einem Fahrzeug verwendeten Notfall-Kommunikationssystem-Engeräteeinheit (1) ausgegebene Fahrzeugpositionsdaten eingeben, und eine Steuereinheit (42), die einen Kartenabgleich durchführt, der auf den Fahrzeugpositionsdaten basiert, um die Fahrzeugposition anzuzeigen.

2. Navigationssystem (4) nach Anspruch 1, **dadurch gekennzeichnet, dass** die Dateneingabemittel zusätzlich Fahrzeugzustandsdaten eingeben, die von der in dem Fahrzeug verwendeten Notfall-Kommunikationssystem-Endgeräteeinheit (1) ausgegeben werden, und die Steuereinheit einen Kartenabgleich durchführt, der auf den Fahrzeugpositionsdaten und den Fahrzeugzustandsdaten basiert.

3. Navigationssystem (4) nach Anspruch 1 oder 2, **dadurch gekennzeichnet, dass** die Dateneingabemittel ein nicht synchronisierendes serielles Signal, ein synchronisierendes serielles Signal, ein Bussignal, ein LAN-Signal, ein Infrarotsignal oder ein Funksignal verwenden.

## Revendications

1. Système de navigation (4) pour indiquer la position d'un véhicule sur un affichage, **caractérisé par** des moyens d'entrée de données (41) qui entrent des données de position d'un véhicule fournies par une unité terminale (1) d'un système de communication d'urgence embarqué, et une unité de commande (42) qui exécute un repérage sur carte en se basant sur les données de position du véhicule pour indiquer la position du véhicule.

2. Système de navigation (4) selon la revendication 1, **caractérisé en ce que** les moyens d'entrée de données assurent additionnellement l'entrée de données concernant l'état du véhicule et délivrées par l'unité terminale (1) du système de communication d'urgence embarqué, et l'unité de commande exécute un repérage sur carte en se basant sur les données de position du véhicule et sur les données d'état du véhicule.

3. Système de navigation (4) selon la revendication 1 ou 2, **caractérisé en ce que** les moyens d'entrée de données utilisent un signal série non synchronisé, un signal série synchronisé, un signal de bus, un signal de réseau local, un signal infrarouge ou un signal radio.
